# EUROPEAN PATENT APPLICATION

(11) **EP 4 651 345 A1**
(43) Date of publication of application: **19.11.2025**
(21) Application number: 24305762.7
(22) Date of filing: 16.05.2024
(51) Int. Cl.: H02K 1/32, H02K 9/06, H02K 5/10, H02K 5/173, H02K 5/20, H02K 7/00

(54) **ELECTRIC TRACTION MOTOR FOR A VEHICLE, WITH A COOLING DEVICE**

(71) Applicant: ALSTOM Holdings, 93400 Saint-Ouen-sur-Seine (FR)
(72) Inventor: NÄSSÉN, Tobias, 72482 Västerås (SE); LINDBERG, Johan, 74632 Bålsta (SE)
(74) Representative: Plasseraud IP

(57) **Abstract**

The invention relates to an electric traction motor (10), comprising : a motor shaft (12) ; a rotor (14) fixed to the motor shaft; a stator (16) coupled to the rotor ; and a motor frame (18) fixed to the stator.

A first (22) and a second (24) ends of the motor shaft are situated outside of the motor frame.

The motor shaft comprises :
- a main channel (52), extending between the first and the second ends of the motor shaft; and
- a plurality of secondary channels (54) connected to an end (60) of the main channel.

The motor also comprises a fan (19) attached to the second end of the motor shaft, so as to generate an air flux through the main channel and secondary channels.

## Description

The present invention relates to an electric traction motor, comprising : a motor shaft extending along a main axis between a first end and a second end ; a rotor extending around the motor shaft and fixed to said motor shaft ; a stator coupled to the rotor ; and a motor frame fixed to the stator, the motor shaft being able to rotate relative to the motor frame around the main axis. The motor frame defines an inner compartment enclosing the rotor and stator, the first and second ends of the motor shaft being situated outside of the inner compartment. The motor shaft comprises : a main channel, extending along the main axis through the inner compartment, a first end of the main channel opening on the first end of the motor shaft, a second end of the main channel being situated in the second end of the motor shaft; and a plurality of secondary channels connected to the second end of the main channel and extending through the second end of the motor shaft.

More precisely, the present invention relates to the temperature regulation of electric traction motors.

The rotation of the rotor generates energy losses, inducing a temperature elevation in the motor, especially in the case of enclosed motors. Said temperature elevation may lead to malfunctions of the motor.

In particular, for the motors comprising bearings, the temperature of said bearings needs control in order to ensure a proper lubrication.

It is known to provide an electric traction motor with a cooling device involving a heat transfer fluid. Document US2436320 discloses an electric motor of the aforementioned type, with a cooling device involving an air flux.

The present invention aims to provide a motor with an improved cooling device.

For this purpose, the invention relates to a motor of the aforementioned type, wherein it also comprises a fan attached to the second end of the motor shaft, so as to generate an air flux through the main channel and secondary channels, between the first and second ends of the motor shaft.

According to preferred embodiments, the motor may include one or more of the following features, considered alone or in any technically possible combination :
- the second end of the motor shaft comprises a radial surface, parallel to the main axis ; and an end of each of the secondary channels opens on the radial surface ;
- the electric traction motor also comprises at least one bearing assembly between the motor shaft and the motor frame, said bearing assembly being situated between the first and second ends of the main channel relative to the main axis ;
- the electric traction motor also comprises : a sealing arrangement for the bearing assembly, the sealing arrangement comprising a first and a second sets of coaxial rings forming baffles, the first and the second sets being fixed respectively to the motor shaft and to the motor frame ; and a support fixed to the radial surface of the second end of the motor shaft; wherein the first set of coaxial rings extends axially from the support and wherein the fan extends radially from the support;
- the support comprises a plurality of radial holes, each of said holes extending from the end of one of the secondary channels ;
- each of the radial holes is situated between the first set of coaxial rings and the fan, relative to the main axis ;
- the sealing arrangement also comprises a third and a fourth sets of coaxial rings forming baffles, the third and the fourth sets being fixed respectively to the motor shaft and to the motor frame, the third and the fourth sets being situated in the inner compartment defined by the motor frame ;
- the inner compartment defined by the motor frame is a closed space.

The invention also relates to a vehicle, comprising : a body ; and an electric traction motor as described above, assembled to said body.

The invention will be easier to understand in view of the following description, provided solely as an example, and with reference to the appended drawing, wherein :
- Figure 1 is a schematic, cross-sectional view of a vehicle comprising an electric traction motor according to an embodiment of the invention ; and
- Figure 2 is a detailed view of the electric traction motor of Figure 1.

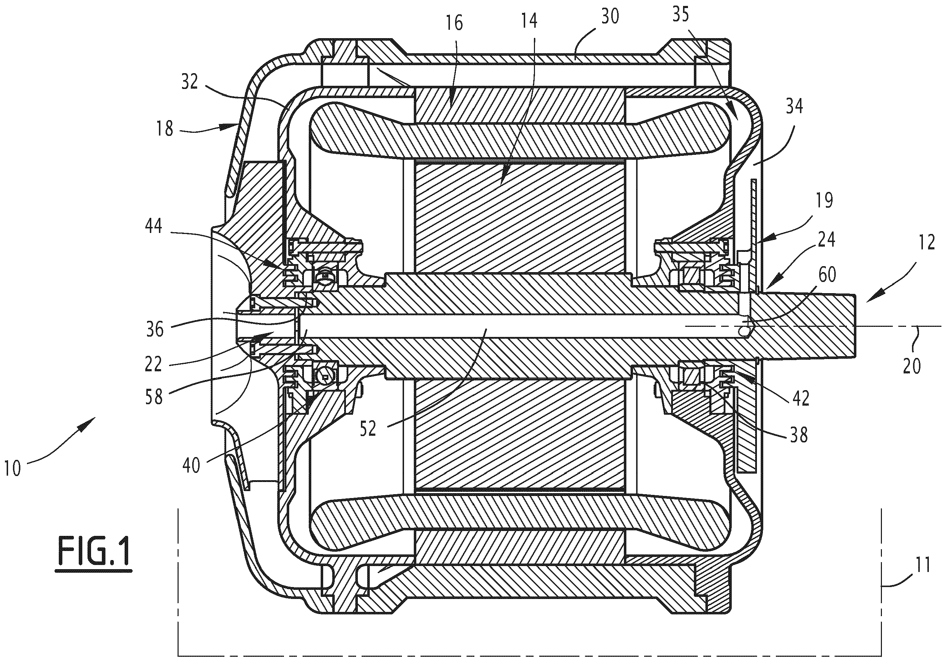

Figure 1 shows an electric traction motor 10 according to an embodiment of the invention. Preferably, the motor 10 is a traction motor of a railway vehicle. More preferably, the motor 10 is assembled to a bogie 11 of the railway vehicle.

As shown on Figure 1, the motor 10 comprises : a motor shaft 12 ; a rotor 14 ; a stator 16 ; and a motor frame 18. The motor 10 also comprises a fan 19 attached to the motor shaft 12.

The motor shaft 12 extends along a main axis 20 between a first end 22 and a second end 24.

The rotor 14 extends around the motor shaft 12 and is fixed to said motor shaft. In an embodiment, the rotor 14 comprises metal laminations inserted around the motor shaft 12 and piled along the main axis 20.

The stator 16 comprises a stator core of tubular shape, coaxial with the main axis 20 and disposed around the rotor 14.

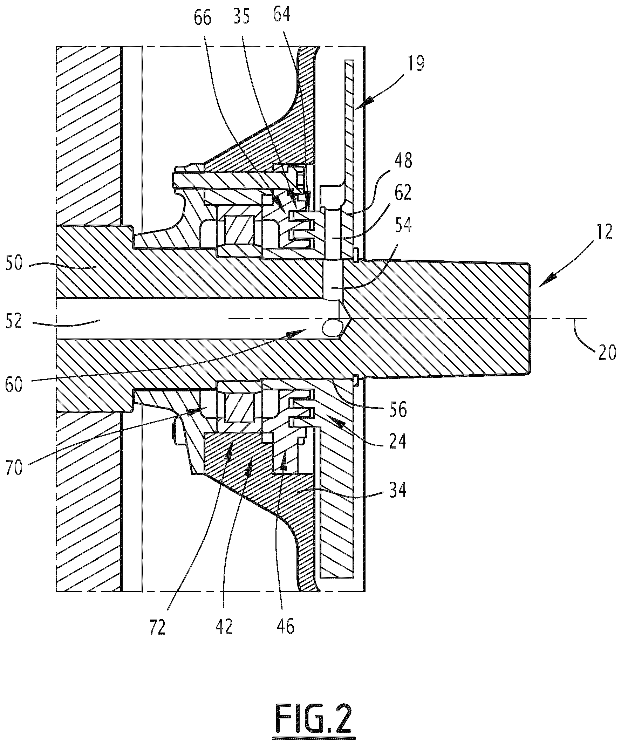

In the embodiment of Figures 1 and 2, the motor frame 18 comprises a main part 30 and a first 32 and a second 34 flanges. The main part comprises a substantially cylindrical inner surface, extending along the main axis 20 and fixed to the stator 16.

The first 32 and second 34 flanges are fixed respectively to a first end and to a second end of the main part 30, relative to the main axis 20. The motor frame 18, more precisely the main part 30 and the first 32 and second 34 flanges, define an inner compartment 35 enclosing the rotor 14 and the stator 16.

According to an embodiment, the motor 10 is an enclosed motor and the inner compartment is a closed space. According to another embodiment (not shown), the motor is an open motor and the motor frame comprises air vents opening on the inner compartment.

Each of the first 32 and second 34 flanges comprises an axial opening 36, 38. The first 22 and second 24 ends of the motor shaft 12 extend axially through the axial openings 36, 38, respectively of the first 32 and of the second 34 flanges. Therefore, each of the first 22 and second 24 ends of the motor shaft is situated outside of the inner compartment 35.

The motor shaft 12 is able to rotate relative to the motor frame 18 around the main axis 20. In the embodiment of Figures 1 and 2, the motor 10 comprises a first 40 and a second 42 bearing assemblies, allowing the rotation of the motor shaft 12 relative to the first 32 and second 34 flanges. The first 40 and second 42 bearing assemblies are axially disposed between the rotor 14 and, respectively, the first 22 and the second 24 ends of the motor shaft 12.

In the embodiment of Figures 1 and 2, the motor 10 also comprises : a sealing arrangement 44, 46 coupled to each bearing assembly 40, 42 ; and a support 48 fixed to the second end 24 of the motor shaft.

The motor shaft 12 will be more precisely described. As shown on Figure 2, the motor shaft 12 comprises : a body 50 ; a main channel 52 ; and a plurality of secondary channels 54.

The body 50 extends along the main axis 20 and is delimited by a radial surface, preferably a surface of revolution around the main axis 20. In particular, the radial surface of the body 50 comprises a cylindrical surface 56, situated at the second end 24 of the motor shaft 12.

The main channel 52 extends in the body 50 along the main axis 20, between a first 58 and a second 60 ends. The first end 58 of the main channel 52 opens on the first end 22 of the motor shaft. The main channel 52 is thus connected to the outside of the motor 10, on the side of the first flange 32.

The main channel 52 extends through the inner compartment 35. The second end 60 of the main channel is a closed end, situated in the second end 24 of the motor shaft 12. Preferably, the cylindrical surface 56 of the second end 24 is disposed around the second end 60 of the main channel.

Each of the first 40 and second 42 bearing assemblies is situated between the first 58 and second 60 ends of the main channel 52 relative to the main axis 20.

Each of the secondary channels 54 extends from the second end 60 of the main channel 52 and opens on the cylindrical surface 56 of the second end 24. The main channel 52 is thus connected to the outside of the motor 10, on the side of the second flange 34.

In the embodiment of Figures 1 and 2, each of the secondary channels 54 is perpendicular to the main axis 20. In another embodiment (not shown), each of the secondary channels 54 is obliquely inclined relative to the main axis 20.

Preferably, the motor shaft 12 includes a number of secondary channels 54 comprised between 2 and 12.

The fan 19 is assembled to the second end 24 of the motor shaft 12. In the embodiment of Figures 1 and 2, the openings of the secondary channels 54 on the cylindrical surface 56 are situated between the second flange 34 and the fan 19, relative to the main axis 20.

The support 48 is disposed around the second end 24 of the motor shaft 12 and preferably ring-shaped. In the embodiment of Figures 1 and 2, the support 48 is fixed to the fan 19 or made one-piece with the fan 19. The fan 19 extends radially from the support 48.

More specifically, in the embodiment of Figures 1 and 2, the support 48 is assembled to the cylindrical surface 56 of the second end 24 and comprises a plurality of radial holes 62. Each of the radial holes 62 lengthens one of the secondary channels 54 of the motor shaft 12.

The sealing arrangement 46 coupled to the second bearing assembly 42 will be more precisely described. The sealing arrangement 46 comprises a first 64 and a second 66 sets of coaxial rings. The rings of the first 64 and second 66 sets are disposed alternatively in the radial direction, forming baffles. The first 64 and the second 66 sets of coaxial rings are fixed respectively to the motor shaft 12 and to the motor frame 18.

Therefore, the first set 64 is able to rotate relative to the second set 66 around the main axis 20. The baffles formed by the first 64 and second 66 sets of coaxial rings protect the second bearing assembly 42 from a pollution from the outside of the motor 10.

In the embodiment of Figures 1 and 2, the first set 64 of coaxial rings extends axially from the support 48, toward the inner compartment 35. In other terms, the radial holes 62 of the support 48 are situated between the first set 64 of coaxial rings and the fan 19, relative to the main axis 20.

Preferably, the first set 64 of coaxial rings is made one-piece with the support 48.

In the embodiment of Figures 1 and 2, the sealing arrangement 46 coupled to the second bearing assembly 42 also comprises a third 70 and a fourth 72 sets of coaxial rings forming baffles, the third and the fourth sets being fixed respectively to the motor shaft 12 and to the motor frame 18. The third 70 and the fourth 72 sets of coaxial rings are situated in the inner compartment 35. The baffles formed by the third 70 and the fourth 72 sets of coaxial rings protect the second bearing assembly 42 from a pollution from the rotor 14.

Preferably, the sealing arrangement 44 coupled to the first bearing assembly 40 has a similar shape as the sealing arrangement 46 described above.

A method of operating the motor 10 will now be described.

The rotation of the motor shaft 12 relative to the motor frame 16 leads to the rotation of the fan 19. Said rotation of the fan generates a difference of pressure between the side of the first flange 32 and the side of the second flange 34. Fresh air from the outside of the motor 10 is thus sucked from the first end 58 of the main channel 52 and is ejected by the radial holes 62 of the support 48, next to the fan 19.

The air flux through the main channel cools the body 50 of the motor shaft 12 by thermal conduction. The bearing assemblies 40, 42 and the rotor 14, in thermal contact with the body 50, are also cooled by the air flux.

The temperature of the rotor 14 and bearing assemblies 40, 42 are thus maintained at an acceptable level, permitting the operating of the motor 10.

The invention avoids the use of a pump, which would be necessary in a cooling device involving a heat transfer liquid.

## Claims

1. An electric traction motor (10) comprising :
- a motor shaft (12) extending along a main axis (20) between a first end (22) and a second end (24) ;
- a rotor (14) extending around the motor shaft and fixed to said motor shaft;
- a stator (16) coupled to the rotor ; and
- a motor frame (18) fixed to the stator, the motor shaft being able to rotate relative to the motor frame around the main axis,
the motor frame defining an inner compartment (35) enclosing the rotor and stator, the first and second ends of the motor shaft being situated outside of the inner compartment;
the motor shaft comprising :
- a main channel (52), extending along the main axis through the inner compartment, a first end (58) of the main channel opening on the first end of the motor shaft, a second end (60) of the main channel being situated in the second end (24) of the motor shaft; and
- a plurality of secondary channels (54) connected to the second end (60) of the main channel and extending through the second end of the motor shaft ;
the electric traction motor being **characterized in that** it also comprises a fan (19) attached to the second end of the motor shaft, so as to generate an air flux through the main channel (52) and secondary channels (54), between the first (22) and second (24) ends of the motor shaft.

2. An electric traction motor according to claim 1, wherein :
- the second end (24) of the motor shaft comprises a radial surface (56), parallel to the main axis ; and
- an end of each of the secondary channels (54) opens on the radial surface.

3. An electric traction motor according to claim 1 or 2, comprising at least one bearing assembly (40, 42) between the motor shaft and the motor frame, said bearing assembly being situated between the first (58) and second (60) ends of the main channel (52) relative to the main axis (20).

4. An electric traction motor according to claim 2 combined with claim 3, also comprising :
- a sealing arrangement (46) for the bearing assembly (42), the sealing arrangement comprising a first (64) and a second (66) sets of coaxial rings forming baffles, the first and the second sets being fixed respectively to the motor shaft (12) and to the motor frame (18); and
- a support (48) fixed to the radial surface (56) of the second end (24) of the motor shaft ;
wherein the first set (64) of coaxial rings extends axially from the support (48) and wherein the fan (19) extends radially from the support.

5. An electric traction motor according to claim 4, wherein the support (48) comprises a plurality of radial holes (62), each of said holes extending from the end of one of the secondary channels (54).

6. An electric traction motor according to claim 5, wherein each of the radial holes (62) is situated between the first set (64) of coaxial rings and the fan (19), relative to the main axis (20).

7. An electric traction motor according to one of claims 4 to 6, wherein the sealing arrangement also comprises a third (70) and a fourth (72) sets of coaxial rings forming baffles, the third and the fourth sets being fixed respectively to the motor shaft (12) and to the motor frame (18), the third and the fourth sets being situated in the inner compartment (35) defined by the motor frame.

8. An electric traction motor according to any one of the previous claims, wherein the inner compartment (35) defined by the motor frame (18) is a closed space.

9. A vehicle comprising a body (11) and an electric traction motor (10) according to one of the previous claims, assembled to said body.
